(19) Europäisches Patentamt

European Patent Office

Office européen des brevets

(11) **EP 1 519 900 B1**

(12) **FASCICULE DE BREVET EUROPEEN**

(45) Date de publication et mention
de la délivrance du brevet:
**06.09.2006 Bulletin 2006/36**

(51) Int Cl.:
***C02F 1/48*** (2006.01)

(21) Numéro de dépôt: **03762726.2**

(22) Date de dépôt: **02.07.2003**

(86) Numéro de dépôt international:
**PCT/FR2003/002055**

(87) Numéro de publication internationale:
**WO 2004/005197 (15.01.2004 Gazette 2004/03)**

(54) **TRAITEMENT D EFFLUENTS ASSOCIANT SEPARATION SOLIDE/LIQUIDE ET CHAMPS ELECTRIQUES PULSES**

ABWASSERBEHANDLUNG MITTELS FEST-FLÜSSIGTRENNUNG UND GEPULSTE ELEKTRISCHE FELDER

EFFLUENT TREATMENT COMBINING SOLID/LIQUID SEPARATION AND PULSED ELECTRIC FIELDS

(84) Etats contractants désignés:
**AT BE BG CH CY CZ DE DK EE ES FI FR GB GR HU IE IT LI LU MC NL PT RO SE SI SK TR**

(30) Priorité: **05.07.2002 FR 0208455**

(43) Date de publication de la demande:
**06.04.2005 Bulletin 2005/14**

(73) Titulaire: **COMMISSARIAT A L'ENERGIE ATOMIQUE**
**75752 Paris Cédex 15 (FR)**

(72) Inventeurs:
• **SCHRIVE, Luc**
  **F-30130 PONT SAINT ESPRIT (FR)**
• **Nouvel, Philip**
  **F-26740 SAUZET (FR)**
• **GRASMICK, Alain**
  **F-34980 MONTFERRIER-sur-LEZ (FR)**

(74) Mandataire: **Poulin, Gérard et al**
**Brevatome**
**3, rue du Docteur Lancereaux**
**75008 Paris (FR)**

(56) Documents cités:
WO-A-02/04356          WO-A-97/17297
DE-A- 4 100 799        DE-A- 10 050 489
DE-A- 19 752 371       FR-A- 2 784 979
GB-A- 2 149 423        US-A- 3 192 142
US-A- 3 480 529        US-A- 3 933 606
US-A- 4 169 029        US-A1- 2002 056 634

**Description**

**DOMAINE TECHNIQUE**

La présente invention concerne un procédé et une installation de traitement d'effluents utilisant des champs électriques pulsés dont l'effet est la modification physico-chimique et biologique d'un milieu aqueux, mis à profit dans la filtration par membranes.

Les besoins en eau en France (eau de consommation humaine, eaux industrielles, eaux agricoles) représentent 700 m$^3$/an par habitant. La consommation humaine est de l'ordre de 300 1/jour et par habitant. Les besoins en eau d'une ville nécessitent un traitement en amont et en aval.

De ce fait la gestion de l'eau figure parmi les grands enjeux actuels, et ceci à trois niveaux différents :

- la ressource amont ;
- le traitement de l'eau avant utilisation, dont une grande partie concerne la consommation humaine (pour simplifier on peut utiliser le terme "potabilisation") ;
- le traitement des rejets sur l'environnement. Il s'agit classiquement des rejets aqueux des stations de traitement ainsi que des boues résiduaires. D'une façon plus large, ce dernier point inclut les traitements d'eau avant réutilisation (ou traitements tertiaires) souvent pour des usages agricoles ou industriels.

L'eau étant le solvant de la vie, les organismes naturels y prolifèrent. Parmi ceux ci, un certain nombre sont pathogènes (bactéries, levures, parasites), ou vont abriter des organismes pathogènes (amibes) ou bien vont permettre à des virus de se développer dans des cellules hôtes.

Dans certains cas, ce sont les composés métaboliques des micro-organismes qui peuvent être pathogènes (toxines de cyanobactéries).

Ou encore, ce sont des composés chimiques, naturels (dérivés de l'azote) ou anthropiques (arsenic, mercure, résidus d'insecticides, résidus d'antibiotiques) qui peuvent être la source de problèmes de santé.

Ces composés sont de tailles et de compositions différentes. Les tailles peuvent être de quelques millimètres pour certains parasites (ascaris lombricoïdes, anguillula intestinalis), de l'ordre de quelques dizaines de micromètres pour leurs oeufs ou les amibes (50 $\mu$m), quelques micromètres pour les bactéries et les champignons (0,3 $\mu$m pour la plus petite dimension de pseudomona diminuta), quelques nanomètres pour les virus (25 mn pour le virus de la poliomyélite), et de l'ordre du nm pour les plus petits composés dissous. Les microorganismes peuvent se trouver sous forme sporulée, fortement résistante aux agressions extérieures. La pathogénicité due aux organismes biologiques (par opposition aux composés chimiques) tient une place importante notamment en raison de l'aspect reviviscent de la plupart des bactéries. Cet aspect est particulièrement important lorsqu'il concerne des sujets immunodéprimés, avec des espèces telles que les kystes de protozoaires comme Cryptosporidium parvum.

Afin de favoriser la compréhension de ce document, le lecteur est averti du risque de confusion entre la membrane biologique d'un micro-organisme et la membrane séparatrice du procédé de filtration. Le premier terme fait explicitement référence à la membrane plasmique constituée d'une double couche lipidique. Le deuxième terme sera qualifié de membrane "procédé", ou membrane de filtration, ou membrane filtrante, ou bien sans précision supplémentaire dans le terme "couplage membranes /CEP".

**ETAT DE LA TECHNIQUE ANTERIEURE**

Les traitements conventionnels de l'eau couvrent l'ensemble des flux d'eau potable, d'eaux de rejets, ou des boues issues des traitements conventionnels afin de respecter les normes édictées Chronologiquement, il s'agit d'éliminer la fraction particulaire (composés dont la taille est supérieure au micromètre), colloïdales (quelques dizaines de nanomètres), puis la fraction soluble. Ces étapes correspondent respectivement aux :

- prétraitements (dégrillage, désablage, déshuilage, tamisage),
- traitements de clarification (coagulation, floculation, flottation),
- désinfection (chimique ou physique),
- traitements de finition (élimination des micro-polluants par oxydation, adsorption sur charbon actif nanofiltration, etc).

Concernant la potabilisation, le traitement habituel est constitué de traitements physiques (dégrillage, filtration sur sable, etc.), physico-chimiques (coagulation, floculation), complétés d'une étape de finition dont le but est d'éviter la reviviscence de micro-organismes ou l'élimination des molécules organiques solubles : chloration, ozonation, oxydation par le peroxyde d'hydrogène, rayonnement ultra-violet, nanofiltration, adsorption sur charbon actif.

Une tendance émergente favorise un traitement séparatif total (par osmose inverse) pour obtenir une eau parfaitement purifiée, puis reconstituer en finale une eau de qualité alimentaire par adjonction des sels et oligo-éléments. C'est le cas des techniques "d'eaux bouteille" dont la demande est en forte croissance tant dans les pays développés (pour des raisons de "confort" gustatif) que dans les pays émergents (pour des raisons sanitaires d'ordre microbiologique).

Dans le domaine des eaux de rejets, le but essentiel des techniques mises en jeu est d'obtenir une concentration en composés pathogènes, de matières en suspension et en composés solubles compatible avec le milieu récepteur. Pratiquement, on met en oeuvre des techniques permettant un abattement de la demande chimique en oxygène (DCO) tel que la DCO résiduelle soit inférieure à 80 ou 100 $mgL^{-1}$ ou un abattement de la demande biologique en oxygène (DBO) tel que la $DBO_5$ soit inférieure à 20 $mgL^{-1}$.

Les techniques les plus classiques sont les traitements biologiques aérobies (oxydation ultime des composés dissous, par exemple de type glucidique sous forme de $CO_2$ et $H_2O$) et anaérobies (fermentation en l'absence d'oxygène dont le dernier stade est un dégagement de méthane). Dans les deux cas, il s'agit de processus de dégradation de la matière organique par une biomasse bactérienne mettant en oeuvre des réactions d'oxydo-réduction catalysées par des enzymes spécifiques.

En ce qui concerne les eaux résiduaires subissant un traitement tertiaire, la qualité bactériologique est habituellement moins drastique que celle concernant l'eau potable du fait que cette eau ne sera pas directement ingérée. Néanmoins, dans la perspective d'une réutilisation de l'eau, les règles deviennent drastiques à l'instar du "title 22" en Californie (dans les eaux réutilisables pour l'agriculture, 22 coliformes par litre sont tolérés) et les procédés impliqués sont de plus en plus similaires aux procédés de potabilisation.

Dans le domaine des boues, 22 kilogrammes de matière sèche sont produits annuellement par équivalent-habitant (soit plus d'un million de tonnes par an en France) provenant du traitement des eaux résiduaires urbaines ou industrielles. A l'origine, les boues sont une suspension extrêmement liquide dont la teneur en matière sèche est de 0,5 à 5 %. Ces boues peuvent être hydrophiles (c'est la majorité) ou hydrophobes, d'origine physique ou biologique selon le traitement dont elles sont issues.

Globalement les boues contiennent de la matière minérale, de la matière organique provenant du catabolisme cellulaire, et des organismes pathogènes parasites (bactéries, oeufs d'helminthes). La difficulté est de produire des boues stabilisées, (siccité: de 15 à 30 %, non fermentescibles) et hygiénisées (la concentration des organismes pathogènes est réduite à des niveaux très bas, respectant les normes du Ministère de la Santé, notamment en salmonelles, oeufs d'helminthes, entérovirus).

Lorsque l'effluent initial contient beaucoup de colloïdes et de matières en suspension, un traitement physique de coagulation est utilisé. En finale, la charge en boues est augmentée (par rapport à la matière entrante), du fait de l'ajout d'additifs de coagulation : polymères spécifiques, métaux trivalents (Al, Fe) sous forme d'hydroxydes ou de chlorures.

Lorsque la matière dissoute est majoritaire, le traitement biologique est préféré. Les boues traitées contiennent alors des résidus biologiques mais une grande partie de la charge entrante est oxydée sous forme d'eau et de gaz. La quantité de boue est habituellement inférieure à la charge entrante. En moyenne (charge entrante moyenne ou forte, pour une DBO résiduelle de 25 à 40 $mgL^{-1}$), la production de boues est 1/2 ou 1/3 de la masse de DBO entrante exprimée en kg $DBO_5/m^3$j. Mais ceci dépend fortement des performances globales du traitement, notamment de l'avancement des réactions d'hydrolyse enzymatiques exocellulaires qui permettent l'assimilation la plus complète possible des composés dissous par les réactions enzymatiques endocellulaires.

Pour évaluer les avantages et les inconvénients des différentes technologies, les paramètres de consommation énergétique, de consommation d'additifs (traitements physico-chimiques) sont essentiels. Egalement, l'efficacité des différentes techniques est à comparer (par exemple : abattement microbien) au regard des risques incidentels liés à l'utilisation de telle ou telle technique (par exemple : panne d'un chloromètre ou rupture d'une membrane de filtration), ou encore au regard des sous-produits indésirables éventuels (dérivés chlorés lors de l'utilisation du chlore, bromés suite à un traitement d'ozonation en présence de brome ; ces produits sont habituellement regroupés sous l'appellation DBP's : "Disinfection By-Products").

La chloration finale est la technique la moins chère mais certains microorganismes résistent à ce traitement, tels les Cryptosporidium. Par ailleurs, ce traitement n'est conseillé qu'en fin de traitement pour ne pas former de "DBP".

L'ozonation pose le problème de l'élimination résiduelle de cet oxydant. Son action reste limité par rapport aux kystes de Cryptosporidium. Certains DBP peuvent aussi se former.

Les technologies par UV sont efficaces du fait de l'efficacité du rayonnement sur l'ADN des micro-organismes, ainsi que sur l'ARN des virus. La difficulté est de s'assurer que tout le flux de liquide est effectivement soumis à une dose de rayonnement minimale. Ce problème est résolu si le réacteur UV ne contient pas de court-circuit. La dose est alors calculée par l'utilisation de modèles complexes prenant en compte la géométrie du réacteur, le type de lampes, leur vieillissement, le flux de liquide à traiter, les caractéristiques de celui-ci, notamment la transmittance au rayonnement. Ces traitements sont souvent la dernière étape après l'élimination des matières en suspension (MES) et de la turbidité.

En ce qui concerne les membranes de filtration, leur avantage est de rassembler plusieurs fonctions selon le seuil de coupure utilisé : élimination des matières en suspension, des microorganismes, de la turbidité, des composés dissous. Si l'on se réfère à l'abattement en organismes pathogènes, les membranes présentent les meilleures performances dès que le seuil de coupure est en deçà de la microfiltration. Néanmoins, les risques de relarguage de microorganismes n'est pas rigoureusement maîtrisé d'où l'absence d'agrément par le Ministère de la Santé. Des tests d'intégrité des membranes de filtration sont obligatoires pour se prémunir de tels désagréments.

Malheureusement, l'inconvénient essentiel des membranes de filtration est leur sensibilité au colmatage, ce qui implique habituellement des prétraitements initiaux, voire plusieurs étapes de filtration en série avec des pores de plus en plus petits.

Les systèmes mettant en oeuvre des champs électriques pulsés ou CEP ont été développés à grande échelle par la mise au point de systèmes électroniques commutant des puissances instantanées considérables, et dont la fiabilité est élevée. Les nouveaux systèmes électroniques mis au point en France par le Commissariat à l'Energie Atomique dans le cadre du programme d'enrichissement de l'uranium par laser (cartes à MOS) permettent des impulsions inférieures à la microseconde, quasiment sans limitation de fréquence.

Le premier domaine d'utilisation est la stérilisation froide des aliments. Cette technique évite la thermo-dégradation de produits alimentaires. Elle ne s'applique qu'aux produits pompables : concentrés de jus de fruits, blancs d'oeuf, liquides divers, etc..

Sur le plan du traitement "de masse" des eaux industrielles, l'utilisation de cette technique est citée en tant que prévention du colmatage biologique (incrustation de mollusques dans les tuyauteries) dans les échangeurs des centrales nucléaires. Les centrales nucléaires sont concernées par le traitement des flux des circuits réfrigérants suite à la découverte d'amibes (Naegleria fowleri, Nf) à la centrale de Nogent-sur-Seine en France.

Ces systèmes industriels s'opposent aux micro-systèmes de laboratoires spécialisés dans les manipulations génétiques, existant depuis plusieurs décennies et traitant seulement quelques millilitres.

Les effets classiquement mentionnés sont les effets de poration et mort de la cellule par un effet "condensateur" dû à l'existence d'une double couche lipidique isolante au niveau de la membrane plasmique. Des effets probables de résonance moléculaire sont également mentionnés, avec effet direct sur l'ADN du noyau. Egalement, certaines fonctions biologiques (synthèse du triphosphate d'adénosine ou ATP, pompe à sodium) peuvent être perturbées.

Pour pallier l'inconvénient du colmatage des membranes de filtration, on a pensé depuis longtemps à associer une autre force motrice que celle provenant de l'énergie mécanique. C'est le cas de l'énergie électrique. Les exemples d'effets électriques associés à la filtration sont nombreux. En général, la tension est continue, de faible valeur (inférieure à 100 V), les procédés s'inspirant de l'électrolyse ou de l'électrolyse membranaire. Il peut s'agir d'une électrocoagulation où le métal des électrodes (aluminium, fer) est solubilisé et s'associe ioniquement à des colloïdes pour favoriser la coagulation avant filtration.

L'électrofiltration en présence d'un surfactant est décrit comme la superposition d'un champ électrique à une pression transmembranaire. La polarisation de concentration est réduite, décuplant les performances en termes de flux.

Des effets chimiques basés sur la production de peroxyde d'hydrogène à partir de l'oxygène atmosphérique dissous sont observés avec une anode en titane recouverte de $RuO_2$. Ce système, appelé électro-peroxydation permettrait d'oxyder les composés chimiques, les particules colloïdales et même les microorganismes. Ces effets permettraient de réduire la résistance au transfert à l'interface membrane de filtration/solution.

La littérature technique cite le cas de couplage champs électriques pulsés/bioréacteur à membranes (BRM) dans un procédé bi-étagé. Dans le premier étage (champs pulsés) le but est la destruction de composés chlorés (minéralisation du chlore) ou phénoliques contenus dans un flux aérosol, c'est-à-dire majoritairement gazeux et non pas liquide.

Les composés phénoliques passent par une étape intermédiaire d'agrégation par polymérisation du noyau phénolique. Ce pré-traitement accélère la vitesse de biodégradation et donc l'efficacité ultérieure du BRM. On peut se référer à ce sujet à l'article «Pulsed power for advanced waste water remediation» de V.M. Bystritskii et al., 11th International Pulsed Power Conference, 1997, pages 79 à 84.

Un couplage champs pulsés/filtration est décrit pour le traitement des boues de station d'épuration. Le brevet américain N° 6 030 538 mentionne la possibilité de diminuer la teneur en eau d'une valeur initiale de 50 % à une valeur finale de 10 à 15 %. Le système combine un chauffage par induction, une filtration en ligne (sous une pression de l'ordre de 70 à 105 bar) et une extrusion des boues séchées à travers des orifices calibrés. Le phénomène décrit est un relarguage du liquide intra-cellulaire, ce qui contribue à l'abaissement de la teneur en eau. Un des paramètres-clés est la concentration en floculant, l'énergie des champs pulsés et l'hydratation des boues. En définitive, le procédé permet d'épandre des boues plus sèches et biologiquement inertes.

Les procédés couplant les champs électriques pulsés et la filtration membranaire se révèlent particulièrement intéressants pour les raisons suivantes.

Les effets des champs pulsés sur un effluent sont de nature : biologique (destruction de cellule), physique (accroissement de la taille de composés en solution) et chimique (minéralisation du chlore).

En définitive, un champ électrique pulsé sera bénéfique à une filtration ultérieure, par son effet sur :

- les petites molécules en initiant des réactions radicalaires permettant de dégrader des micropolluants, et d'abaisser la DCO soluble,
- la fraction colloïdale d'une solution, caractérisée par des charges de surface et formée par des agrégats plus ou moins organisés de molécules, de macromolécules, de débris cellulaires,
- la rupture de macromolécules, favorisant des réactions d'hydrolyse enzymatiques exocellulaires afin de diminuer la production de boues d'origine biologique,
- la libération de molécules endoplasmiques ayant un effet coagulant (polysaccharides),
- la destruction ou l'inactivation des microorganismes par éclatement du cytoplasme ou par action directe sur le noyau cellulaire.

Le brevet US-A-4 169 029 divulgue un procédé et un appareil de purification et de décontamination électrique de liquides contenant des matières dissoutes et en suspension, au moyen d'un courant électrique pulsé.

Le document DE-A-41 00 799 divulgue l'emploi d'un champ électrique pulsé pour agglomérer des particules (minérales, métalliques ou des micro-organismes).

Le brevet US-A-3 933 606 divulgue un procédé et un appareil de traitement de l'eau. L'eau contaminée à purifier est introduite dans une colonne où elle est exposée à un champ électrique pulsé. Ce champ électrique pulsé détruit les bactéries et le cyanure présents. Il provoque la formation de floculats. L'eau traitée transite par un bassin de floculation et est ensuite filtrée.

Le document DE-A-100 50 489 concerne la décontamination et la stérilisation de l'eau au moyen d'un champ électrique pulsé. L'application du champ électrique pulsé se fait dans un récipient. Un ou plusieurs filtres sont employés avant ou après le passage de l'eau dans le récipient.

Le brevet US-A-3 192 142 divulgue un procédé et un dispositif de préparation d'eau potable à partir d'eau brute insalubre. L'eau à purifier circule au contact d'électrodes alimentées par une tension continue, basse tension, pulsée afin d'amorcer la coagulation des impuretés. Il est également prévu de filtrer l'eau après qu'elle ait circulé au contact des électrodes. :

Le document DE-A-197 52 371 divulgue un procédé de déshydratation de boues. Une haute tension pulsée est utilisée pour perforer la membrane des cellules biologiques.

## EXPOSE DE L'INVENTION

L'invention a été conçue pour offrir un nouveau procédé et une nouvelle installation de traitement d'effluents associant séparation solide/liquide et champs électriques pulsés, ce nouveau procédé et cette nouvelle installation étant plus simples à mettre en oeuvre et d'une plus grande efficacité que les techniques de l'art antérieur.

Le procédé de l'invention est basé sur le couplage de la séparation solide/liquide avec les champs électriques pulsés.

L'association des effets biologique, physique et chimique introduits par les champs électriques pulsés permet de réduire la population cellulaire, de relarguer des substances présentes dans le cytoplasme et d'hydrolyser les macromolécules. Dans ces conditions, et de façon inattendue, les microorganismes non détruits voient leur activité biologique augmenter. Les réactions d'assimilation biologique sont alors accélérées, ce qui se traduit par une augmentation du taux de consommation des substances polluantes dissoutes. Par ailleurs, cette augmentation de l'activité biologique s'accompagne d'un cannibalisme entre microorganismes, ce qui entraîne une diminution globale de la biomasse. Enfin, la libération de certains composés endo-cellulaire contribue à agréger les matières en suspension et facilite une séparation liquide/solide ultérieure.

L'invention a donc pour objet un procédé de traitement d'effluents dans lequel un flux desdits effluents est soumis à un champ électrique pulsé dont l'effet est la modification des caractéristiques physico-chimiques et biologiques mise à profit lors d'une opération de séparation solide/liquide, la séparation solide/liquide et la soumission à un champ électrique pulsé étant des opérations effectuées à des endroits différents du flux d'effluents, caractérisé en ce que le champ électrique pulsé est utilisé selon un mode en décharge, c'est-à-dire à simple effet, le mode en décharge étant obtenu par décharge impulsionnelle d'un condensateur alimenté par une alimentation continue, et présente des caractéristiques réglables de valeur de tension, de valeur de courant, de fréquence de répétition des impulsions et de forme du front de tension.

Le champ électrique pulsé peut aussi être utilisé selon un mode en charge et en décharge, c'est-à-dire à double effet, le mode en charge étant obtenu par charge impulsionnelle d'un condensateur alimenté par une alimentation continue.

L'opération de séparation solide/liquide peut être une opération de filtration membranaire (filtration tangentielle, frontale ou semi-frontale) ou une opération de décantation.

Avantageusement, ladite modification des caractéristiques physico-chimiques et biologiques permet l'hydrolyse de substances dissoutes, l'agrégation de colloïdes, la destruction complète ou partielle de microorganismes et l'activation simultanée des microorganismes restants.

Le procédé selon l'invention peut s'appliquer au traitement des effluents et des boues de station d'épuration soit en réacteur à boues activées, soit en bioréacteur à membranes.

L'invention a aussi pour objet une installation de traitements d'effluents comprenant des moyens pour soumettre un flux desdits effluents à une séparation solide/liquide et des moyens pour soumettre le flux desdits effluents à un champ électrique pulsé dont l'effet est la modification des caractéristiques physico-chimiques et biologiques mise à profit lors de la séparation solide/liquide, les moyens de séparation solide/liquide et les moyens de soumission à un champ électrique pulsé étant disposés à des endroits différents du flux d'effluents, caractérisé en ce que les moyens de soumission à un champ électrique pulsé sont des moyens fonctionnant selon un mode en décharge, c'est-à-dire à simple effet, le mode en décharge étant obtenu par décharge impulsionnelle d'un condensateur alimenté par une alimentation continue, et présentent des caractéristiques réglables de valeur de tension, de valeur de courant, de fréquence de répétition des impulsions et de forme de front de tension.

Les moyens de soumission à un champ électrique pulsé peuvent être des moyens fonctionnant aussi selon un mode en décharge et en charge, c'est-à-dire à double effet, le mode en charge étant obtenu par charge impulsionnelle d'un condensateur alimenté par une alimentation continue.

Les moyens pour soumettre le flux d'effluents à une séparation solide/liquide peuvent être des moyens de filtration membranaire (filtration tangentielle, frontale ou semi-frontale) ou.des moyens de décantation.

Avantageusement, la modification des caractéristiques physico-chimiques et biologiques permet l'hydrolyse de substances dissoutes, l'agrégation de colloïdes, la destruction complète ou partielle de microorganismes et l'activation simultanée des microorganismes restants.

## BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1 est un schéma électrique d'un circuit affecté à une tête de traitement à simple effet et utilisable par la présente invention,
- la figure 2 est un schéma électrique d'un circuit affecté à une tête de traitement à double effet et utilisable par la présente invention,
- la figure 3 est un schéma d'une installation de traitement d'effluents selon une première variante de la présente invention,
- la figure 4 est un schéma d'une installation de traitement d'effluents selon une deuxième variante de la présente invention,
- la figure 5 est un schéma d'une installation de traitements d'effluents selon une troisième variante de la présente invention,
- la figure 6 est un diagramme montrant l'évolution de la respiration, au cours du temps, d'une biomasse en phase endogène en fonction de l'augmentation du nombre d'impulsions subi.

## DESCRIPTION DETAILLEE DE MODES DE REALISATION DE L'INVENTION

A titre d'exemple, les modes de réalisation décrits ci-dessous porteront sur une séparation solide/liquide obtenue par membrane.

Contrairement aux différents procédés d'électrofiltration (ou électro-membranaires) de l'art antérieur, l'électrode "haut potentiel" dans la mise en oeuvre de la présente invention n'est pas à l'intérieur de la membrane filtrante ou n'est pas constituée de la membrane séparatrice elle-même. Cet aspect simplifie la mise en oeuvre du procédé. Les membranes standard du commerce peuvent être montées en module sans rajouter une feuille conductrice en vis-à-vis (membrane plane ou spirale) et sans noyau conducteur interne (membrane cylindrique).

Ceci est dû au fait que les champs électriques dans le domaine où ils sont utilisés produisent des effets physico-chimiques et biologiques dont la durée est suffisamment longue pour être profitables pendant quelques secondes ou quelques minutes.

Les amplitudes du champ électrique sont également beaucoup plus élevées. En pratique, les effets décrits dans les anciens procédés d'électro-filtration sont assez similaires aux phénomènes d'électrolyse où le paramètre important est la génération d'un fort courant électrique sous une faible tension. C'est le nombre d'électrons échangés à la cathode qui est prépondérant et non pas la tension qui reste limitée à des valeurs de quelques dizaines ou centaines de volts. Dans le nouveau procédé membrane/CEP proposé, il est important de disposer d'une tension importante (5 à 30 kV) afin de produire un champ électrique intense (5 à 100 kV/cm préférablement de 10 à 50 kV/cm) dans le but de faire éclater la membrane plasmique des microorganismes.

Enfin, la fréquence de répétition des impulsions est également un paramètre prépondérant : selon la nature des molécules impliquées dans le colmatage, il est possible de régler la fréquence des impulsions aux valeurs pour lesquelles un phénomène de résonance va inactiver le composé (ou la famille de composés) afin de faciliter leur passage dans la membrane "procédé" et réduire les phénomènes de colmatage interne, notamment ceux dus à l'adsorption par des effets de charge électrostatique.

Enfin, un autre paramètre important est la forme du front de tension : il est préférable de disposer de systèmes où la montée en tension s'effectue de façon quasi-instantanée, par opposition aux systèmes sinusoïdaux ou lorsque les effets d'inductance sont trop marqués.

L'effet des fronts d'onde est assimilable à une onde de choc, susceptible d'inactiver définitivement le noyau d'une bactérie sans éclatement et relarguage de composés endocellulaires.

Le couplage judicieux des effets modulables des CEP (tension, courant, fréquence, front d'onde), et de la séparation membranaire permet d'obtenir le traitement désiré des effluents.

On peut favoriser au choix la valeur de la tension électrique, du courant, la forme du front d'onde et la fréquence de répétition des impulsions.

Une forte tension permet de faire éclater des cellules et de séparer ou de valoriser ultérieurement les composés internes relargués. Elle permet aussi de s'assurer de la destruction complète des microorganismes et d'éviter leur prolifération sous forme de biofilm sur la surface membranaire.

Le passage d'un fort courant (c'est-à-dire d'un grand nombre d'électrons) permet de transférer des charges à des colloïdes ou des composés chargés afin de les neutraliser puis de les agréger et enfin de pouvoir les séparer facilement par une ségrégation stérique à l'aide de membranes de filtration tangentielles.

Le front d'onde est important lorsque l'on veut inactiver définitivement des bactéries ou autres organismes biologiques pathogènes par action directe sur leur noyau et pouvoir les retenir sur les membranes de filtration sans prolifération possible et sans relarguage de composés métaboliques.

La fréquence de répétition des impulsions intervient par les effets électrocinétiques liés au moment dipolaire de la membrane plasmique. Lorsque les forces électrocinétiques sont supérieures aux forces de cohésion de la double couche lipidique, celle ci se rompt et peut conduire à l'éclatement puis à la mort des microorganismes.

Dans tous les procédés par champs électriques pulsés divulgués dans l'art antérieur, il apparaît que les utilisateurs ne se soucient que d'un effet de "simple décharge" à travers la tête de traitement, plus précisément à travers la veine du liquide à traiter. Ceci provient du fait que les effets les plus connus consistent à rechercher l'éclatement cellulaire. Les puissances instantanées nécessaires sont très élevées : de l'ordre de plusieurs centaines de MW pendant 1 $\mu$s.

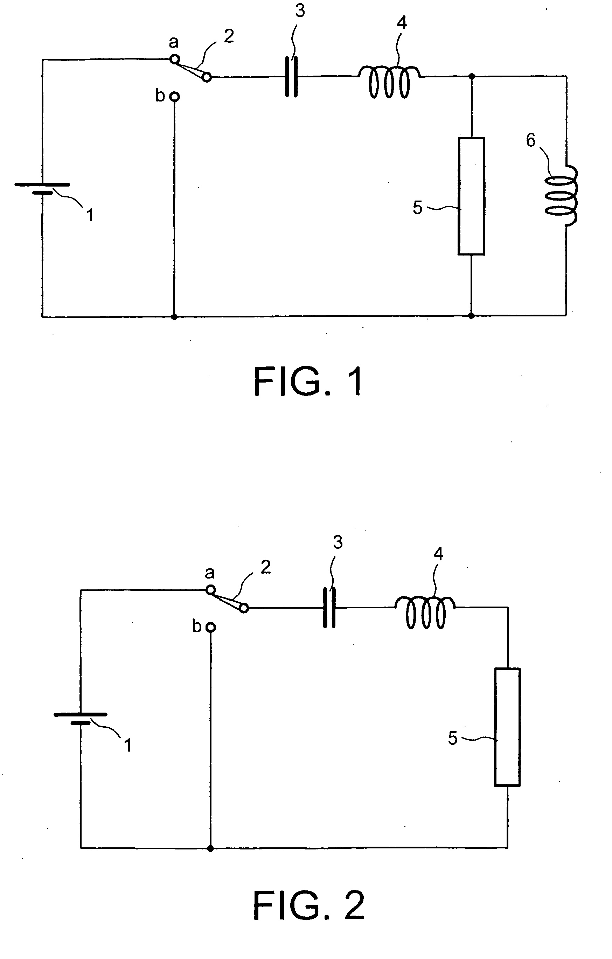

Habituellement, le passage du courant de charge dans la tête de traitement est limité en insérant en parallèle à la tête de traitement un élément électrique dont l'impédance sera nulle en régime continu et élevée en régime transitoire, telle qu'une inductance pure. La figure 1 est le schéma électrique d'un circuit affecté à une tête de traitement à simple effet. Le circuit comprend une alimentation continue 1 de 1 à 20 kV et pouvant débiter un courant de 2 à 50 A, un commutateur impulsionnel 2 pouvant basculer d'une position a à une position b, un condensateur 3 et une inductance série 4. La tête de traitement des effluents est référencée 5. Elle comporte une inductance 6 branchée en parallèle. Pour obtenir la charge, le commutateur 2 est sur la position a et la résistance 5 représentant la tête de traitement est shuntée par la présence de l'inductance pure 6. Pour obtenir la décharge, le commutateur 2 est sur la position b et le système de commutation haute puissance constitué par le condensateur 3 et l'inductance 4 fournit une décharge dont les caractéristiques sont une tension de 5 à 50 kV et un courant de 500 à 2000 A pendant 1 $\mu$s.

Dans la perspective d'une séparation membranaire couplée aux CEP, on peut également profiter de l'effet électrique pendant la charge. Ceci peut être réalisé, par exemple, en choisissant de faire passer le courant de charge dans la tête de traitement. Dans ce cas, la tête de traitement est montée seule comme le montre la figure 2 qui est le schéma électrique d'un circuit affecté à une tête de traitement à double effet. Le temps de charge est, en général, de l'ordre de plusieurs dizaines de $\mu$s, ce qui permet de respecter le temps nécessaire au transfert de charges et au transfert de matière qui en découle (agrégation colloïdale). Ce temps est en effet plus élevé que le transfert d'électrons puisqu'il faut renouveler les espèces (molécules, colloïdes) à l'interface des électrodes. Les caractéristiques de la charge pour la tête de traitement sont une tension de 1 à 20 kV et un courant de 2 à 50 A. Pendant la décharge, ces caractéristiques sont une tension de 5 à 50 kV et un courant de 500 à 2000 A.

Les avantages du passage d'un courant dans la tête pendant la charge sont d'éviter la polarisation des électrodes, et ainsi de rallonger leur durée de vie, et de permettre de transférer des électrons susceptibles d'agréger des colloïdes favorisant alors le flux trans-membranaire lors de l'étape de filtration.

Au contraire, shunter la tête de traitement pendant la charge va favoriser des conditions de fonctionnement à fréquence élevée (le temps entre deux impulsions est réduit), permettant de ce fait la mise en oeuvre de fronts de tension très raides.

En conclusion, le procédé de l'invention permet de doubler les effets classiquement envisagés lors de la mise en oeuvre des CEP, ces effets étant mis à profit dans l'étape de séparation membranaire.

Le passage d'un fort courant à travers un milieu conducteur s'accompagne d'un champ magnétique plus ou moins intense et plus ou moins localisé susceptible de perturber des signaux électriques. Ce phénomène est mis à profit de façon inattendue au niveau biologique ou moléculaire. On aboutit à l'inactivation de composés biologiques spécifiques responsables de l'adhésion des molécules biologiques entre elles ou responsable de l'adhésion intercellulaire et donc du biofilm sur la membrane de filtration. En outre, d'autres valeurs de fréquence favorisent le passage de certaines molécules ou ions à travers la membrane de filtration, en limitant leur activité chimique et leur propension à former des molécules complexes susceptibles de s'adsorber en profondeur sur la paroi du pore.

Les applications potentielles de champs électriques pulsés couplés à la séparation membranaire favorisée par la modification des caractéristiques physico-chimiques et biologiques d'un milieu aqueux se situent dans tous les domaines de la séparation solide/liquide et d'utilisation des membranes de filtration :

- traitement de l'eau: réduction du biofilm, diminution du colmatage interne, décontamination biologique ;
- traitement des effluents : réduction du colmatage externe, oxydation de micro-polluants ;
- réacteurs à boues activées, en amont de la décantation, grâce à l'activation des microorganismes et à la diminution de la quantité de biomasse ;
- bioréacteurs à membranes: étape de préhydrolyse par rupture des macromolécules avant filtration ;
- hygiénisation des boues biologiques: destruction/éclatement de microorganismes et concentration par membranes de filtration ;
- production de jus de fruits: éclatement des membranes cellulosiques (équivalentes pour les végétaux à la membrane plasmique) et séparation par filtration des fibres et fragments de cellules végétales ;
- déstabilisation de suspensions ou d'émulsion eau/huile par accroissement des gouttelettes de la phase dispersée et séparation facilitée des deux phases ;
- traitement de phases organiques peu conductrices de l'électricité (par rapport aux phases aqueuses; par exemple huiles végétales, minérales, de synthèse, ou solvants organiques apolaires).

La différence des caractéristiques électriques des composés en suspension ou en solution est mise à profit pour agréger les composés les plus conducteurs, et favoriser une filtration couplée.

Selon l'invention, la filtration peut couvrir différentes gammes : la microfiltration (particules de taille comprise entre $0,1\,\mu m$ et $10\,\mu m$), l'ultrafiltration (molécules de taille comprise entre $0,005\,\mu m$ et $0,1\,\mu m$), la nanofiltration (molécules de taille comprise entre $0,001\,\mu m$ et $0,005\,\mu m$), l'osmose inverse (molécules de taille inférieure à $0,001\,\mu m$). Pour ces types de filtration, la force motrice est la pression de transfert, contrairement aux procédés électromembranaires.

Les champs électriques pulsés couvrent la gamme des fréquences de l'ordre de 1 Hz à 100 000 Hz, de préférence de 1 Hz à 10 000 Hz. Le champ électrique peut varier de 1 kV/cm à 100 kV/cm, de préférence de 3 kV/cm à 50 kV/cm. L'effet électrique peut être répété entre 1 et 1000 fois par seconde, de préférence entre 1 et 100 fois. Egalement, seule une partie du flux peut être soumis aux CEP avant traitement par filtration.

Du fait que les transformations des caractéristiques physico-chimiques et biologiques sont durables, le couplage membrane(s)/CEP s'effectue de façon légèrement décalée dans le temps. Les CEP peuvent être appliqués entre 0,1 et 1000 secondes avant la filtration, par exemple entre 1 et 100 secondes. Le temps qui s'écoule entre le traitement CEP et la filtration provient du temps de séjour t des effluents dans les tuyauteries qui les véhiculent, calculé à partir du rapport du volume V de l'installation entre CEP et membranes et le débit d'alimentation Q des modules membranaires :

$$t = V/Q.$$

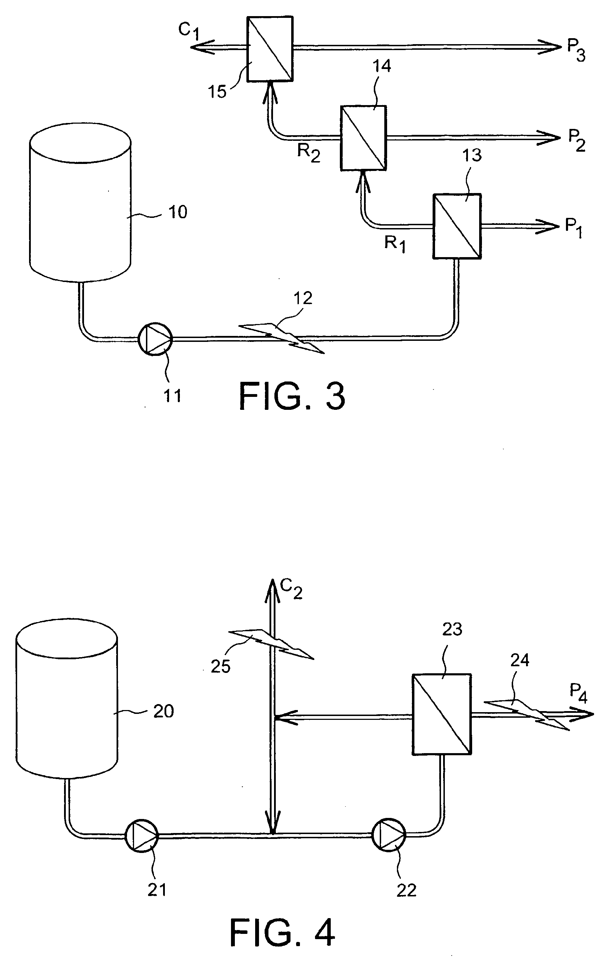

La figure 3 est un schéma représentant l'insertion d'un système CEP en amont de la filtration sur le circuit d'alimentation en effluents. Les effluents proviennent d'un réservoir 10 et sont fournis par l'intermédiaire d'une tuyauterie à l'installation de traitement. En sortie du réservoir 10, une pompe 11 assure la pressurisation et la circulation des effluents avec un débit Q. Les effluents sont d'abord soumis à des champs électriques pulsés délivrés par un dispositif CEP 12 avant de parvenir à des systèmes à membrane 13, 14 et 15. Le système à membrane 13 fournit un premier perméat $P_1$ et un rétentat $R_1$ au système à membrane 14. Le système à membrane 14 fournit un deuxième perméat $P_2$ et un rétentat $R_2$ au système à membrane 15. Le système à membrane 15 fournit un troisième perméat $P_3$ et un concentrat $C_1$.

Le couplage peut aussi s'effectuer en sens inverse. La première étape du procédé est alors la filtration, la deuxième étape consistant en un traitement par CEP. C'est ce qu'illustre la figure 4 où un système CEP est inséré en aval de la filtration sur le perméat final (désinfection finale) et sur le concentrat (hygiénisation de boues biologiques). Les effluents proviennent d'un réservoir 20 et sont fournis, par l'intermédiaire d'une pompe de pressurisation 21 et d'une pompe de circulation 22 disposées en série, à un système à membrane 23. Le système à membrane 23 fournit un

perméat $P_4$ après passage dans un dispositif CEP 24 et un rétentat qui est partiellement remis en circulation entre les pompes 21 et 22. Le système à membrane 23 fournit également un concentrat $C_2$ après passage dans un dispositif CEP 25. Dans ce cas, on recherche essentiellement un effet désinfectant final après l'étape de filtration, ce qui permet d'utiliser des membranes de filtration non agrées en termes de désinfection (membranes cylindriques, spirales, planes). Les membranes à fibres creuses peuvent également être couplées à des dispositifs CEP. Dans ce cas, c'est indifféremment le concentrat ou le perméat qui est visé par le traitement CEP à des fins d'hygiénisation.

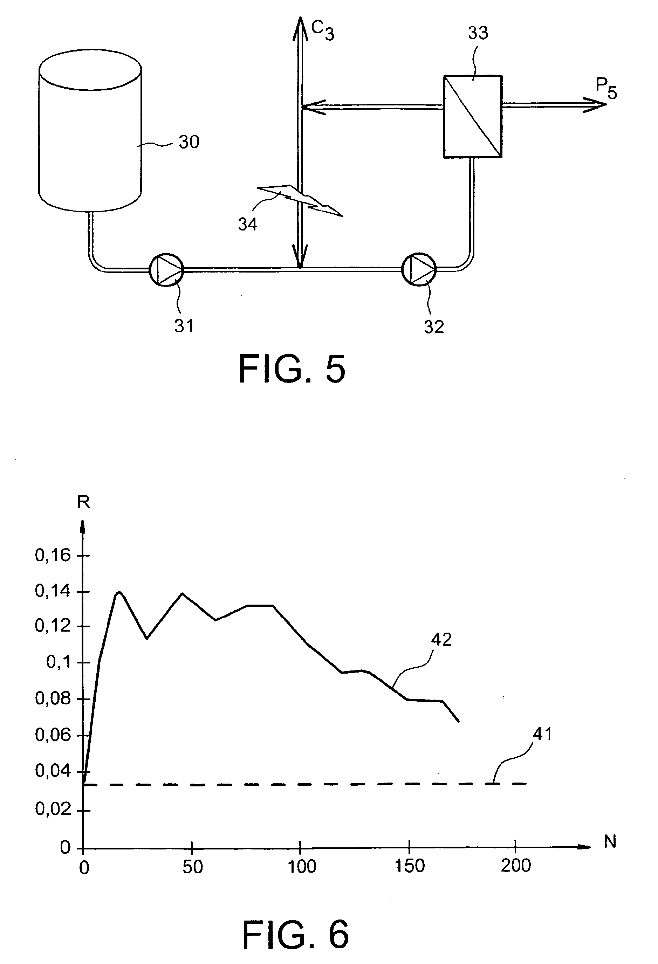

Les traitements CEP et de séparation peuvent également être alternés, notamment dans une boucle de filtration tangentielle où le rétentat circule classiquement plusieurs fois (c'est-à-dire en boucle) à travers la membrane "procédé". C'est ce qu'illustre la figure 5. Les effluents proviennent d'un réservoir 30 et sont fournis, par l'intermédiaire d'une pompe de pressurisation 31 et d'une pompe de circulation 32 disposées en série, à un système à membrane 33. Le système à membrane 33 fournit un perméat $P_5$ et un rétentat qui est partiellement remis en circulation entre les pompes 31 et 32 après passage dans un dispositif CEP 34. Le système à membrane 33 fournit également un concentrat $C_3$.

Les électrodes du dispositif CEP peuvent présenter les géométries habituelles : planes, concentriques, etc... L'effet recherché est que le champ électrique possède des valeurs suffisantes pour inactiver les différentes espèces en présence et que les pertes de charge hydraulique restent dans des valeurs acceptables par rapport au coût énergétique total.

Un nouveau procédé de traitement de l'eau et des effluents couplant les technologies par membranes de filtration et les champs électriques pulsés (CEP) est ici divulgué. Les phénomènes mis en oeuvre par les CEP concourent à la modification des caractéristiques physico-chimiques et biologiques mise à profit notamment dans la réduction du colmatage membranaire dans toute la gamme des modes de mise en oeuvre du procédé où la pression est la force motrice :

microfiltration, ultrafiltration, nano-filtration et
osmose inverse. Du fait des paramètres réglables des CEP (intensité, tension, fréquence, front d'onde, etc.), ces phénomènes sont potentiellement :

- la réduction du biofilm (éclatement et lyse ou inactivation temporaire de micro-organismes),
- la destruction partielle des microorganismes et l'activation simultanée des microorganismes restants,
- l'agrégation de colloïdes (transfert de charges électriques' limitant la répulsion électrostatique),
- une pré-hydrolyse de macromolécules (par rupture des macromolécules),
- une oxydation des micropolluants (par formation de radicaux libres),
- le maintien en suspension de molécules "incrustantes".

Les traitements d'aliments liquides, de l'eau de boisson, des eaux thermales, des eaux usées ou bien des boues de stations sont des champs d'application potentiels de ce nouveau procédé.

Parmi les avantages procurés par l'invention, on peut mentionner l'absence d'effets électrolytiques majeurs prouvée par l'absence d'usure des électrodes. L'état de surface des électrodes, après environ 200 heures de fonctionnement, a été étudié à l'aide d'un appareil Nanofocus AG. En particulier, la valeur de la rugosité de surface permet d'affirmer qu'aucune modification n'est intervenue au cours de ces 200 heures de fonctionnement. Ce résultat indique qu'il n'y a pas eu d'attaque chimique ou électrochimique de la surface.

Un autre avantage procuré par l'invention réside dans l'activation instantanée et durable d'une population de microorganismes en phase endogène et l'inactivation d'une population en présence de substrat. Dans les deux cas, la mortalité cellulaire est due à la non-reviviscence cellulaire, ce qui signifie que les microorganismes possèdent une capacité de métabolisation pendant toute la durée de leur vie individuelle. Comme les microorganismes restent vivants, ils vont continuer à agir selon deux voies différentes. Ils agissent par excrétion de métabolites facilitant la séparation solide-liquide. Ils agissent aussi par assimilation des composés exogènes dissous, conduisant à un abaissement du niveau de pollution de l'effluent.

Des essais ont été réalisés en circuit ouvert, à 78 Hz (10 impulsions par passage) ou à 780 Hz (100 impulsions par passage). Le taux de destruction cellulaire a été caractérisé par la méthode de numération sur gélose. Il est compris entre 97,2 et 99,2% pour l'essai à 78 Hz et égal à 99,97% pour l'essai à 780 Hz. Une inactivation proche de 4 Log est possible pour des valeurs d'énergie de l'ordre de 10 kWh/m$^3$.

La caractérisation de l'activité cellulaire a été réalisée par la méthode de respirométrie.

Concernant l'effet des CEP sur une suspension de levures en phase endogène, un essai (à 78 Hz correspondant à 10 impulsions par passage) a été effectué en mode recyclage afin d'augmenter le nombre de traitements au cours du temps.

La figure 6 est un diagramme montrant l'évolution de la respiration R au cours du temps en fonction du nombre de traitements subis N. La respiration R est donnée en milligrammes d'oxygène par litre et par minute. La droite 41, en traits interrompus, donne la valeur de la respiration avant traitement, c'est-à-dire la valeur de la vitesse de consommation d'oxygène en phase endogène. La courbe 42 montre l'évolution de la respiration au cours du temps.

On remarque que la respiration augmente brutalement dès les premiers traitements. L'augmentation de la respiration est de l'ordre de 4 au cours des 90 premières impulsions. Par la suite elle diminue notablement sans toutefois atteindre la valeur initiale. L'explication la plus plausible est que le choc électrique subi par les levures a pour conséquence un relarguage des composés endoplasmiques dans le milieu (comme le prouve l'augmentation de la DCO (demande chimique en oxygène) du milieu qui passe de 55 mg/l à 70 mg/l). Dans un premier temps les levures non lésées réabsorbent ces composés avec pour effet d'augmenter la respiration. Dans un deuxième temps, le nombre de cellules lésées ou détruites augmente provoquant une baisse de l'activité totale de la biomasse.

L'effet le plus remarquable est donc l'activation instantanée et brutale de la biomasse en phase endogène lorsque celle-ci est soumise à un choc électrique. A l'inverse, une population en présence de substrat est choquée momentanément mais retrouve des capacités de métabolisation pendant toute la durée de vie. Néanmoins, dans les deux cas la capacité reproductrice de la biomasse provient uniquement de la fraction non choquée. La fraction choquée (et lysée) est non reviviscente : c'est ce qui apparaît lors des tests de numération sur gélose.

## Revendications

1. Procédé de traitement d'effluents dans lequel un flux desdits effluents est soumis à un champ électrique pulsé dont l'effet est la modification des caractéristiques physico-chimiques et biologiques mise à profit lors d'une opération de séparation solide/liquide, la séparation solide/liquide et la soumission à un champ électrique pulsé étant des opérations effectuées à des endroits différents du flux d'effluents, **caractérisé en ce que** le champ électrique pulsé est utilisé selon un mode en décharge, c'est-à-dire à simple effet, le mode en décharge étant obtenu par décharge impulsionnelle d'un condensateur alimenté par une alimentation continue, et présente des caractéristiques réglables de valeur de tension, de valeur de courant, de fréquence de répétition des impulsions et de forme du front de tension.

2. Procédé selon la revendication 1, **caractérisé en ce que** le champ électrique pulsé est utilisé selon un mode en charge et en décharge, c'est-à-dire à double effet, le mode en charge étant obtenu par charge implusionnelle d'un condensateur alimenté par une alimentation continue.

3. Procédé selon la revendication 1, **caractérisé en ce que** l'opération de séparation solide/liquide est une opération de filtration membranaire.

4. Procédé selon la revendication 3, **caractérisé en ce que** la filtration est d'un type choisi parmi la filtration tangentielle, la filtration frontale et la filtration semi-frontale.

5. Procédé selon la revendication 1, **caractérisé en ce que** l'opération de séparation solide/liquide est une opération de décantation.

6. Procédé selon la revendication 1, **caractérisé en ce que** le champ électrique pulsé présente des caractéristiques réglées pour ; que ladite modification des caractéristiques physico-chimiques et biologiques permette l'hydrolyse de substances dissoutes, l'agrégation de colloïdes, la destruction complète ou partielle de microorganismes et l'activation simultanée des microorganismes restants.

7. Application du procédé selon la revendication 1 au traitement des effluents et des boues de station d'épuration soit en réacteur à boues activées, soit en bioréacteur à membranes.

8. Installation de traitements d'effluents comprenant des moyens pour soumettre un flux desdits effluents à une séparation solide/liquide et des moyens pour soumettre le flux desdits effluents à un champ électrique pulsé dont l'effet est la modification des caractéristiques physico-chimiques et biologiques mise à profit lors de la séparation solide/liquide, les moyens de séparation solide/liquide (13, 14, 15 ; 23 ; 33) et les moyens de soumission à un champ électrique pulsé (12 ; 24, 25 ; 34) étant disposés à des endroits différents du flux d'effluents, **caractérisée en ce que** les moyens de soumission à un champ électrique pulsé sont des moyens fonctionnant selon un mode en décharge, c'est-à-dire à simple effet, le mode en décharge étant obtenu par décharge implusionnelle d'un condensateur alimenté par une alimentation continue, et présentent des caractéristiques réglables de valeur de tension, de valeur de courant, de fréquence de répétition des impulsions et de forme de front de tension.

9. Installation selon la revendication 8, **caractérisée en ce que** les moyens de soumission à un champ électrique pulsé (12 ; 24, 25 ; 34) sont des moyens fonctionnant selon un mode en charge et en décharge, c'est-à-dire à double effet, le mode en charge étant obtenu par charge impulsionnelle d'un condensateur alimenté par une alimentation continue.

10. Installation selon la revendication 8, **caractérisée en ce que** les moyens pour soumettre le flux desdits effluents à une séparation solide/liquide sont des moyens de filtration membranaire.

11. Installation selon la revendication 10, **caractérisée en ce que** les moyens de filtration (13, 14 15 ; 23 ; 33) sont d'un type choisi parmi des moyens de filtration tangentielle, des moyens de filtration frontale et des moyens de filtration semi-frontale.

12. Installation selon la revendication 8, **caractérisée en ce que** les moyens pour soumettre le flux desdits effluents à une séparation solide/liquide sont des moyens de décantation.

13. Installation selon la revendication 8, **caractérisée en ce que** le champ électrique pulsé présente des caractéristiques réglées pour que ladite modification des caractérisques physico-chimiques et biologiques permette l'hydrolyse de substances dissoutes, l'agrégation de colloïdes, la destruction complète ou partielle de microorganismes et l'activation simultanée des microorganismes restants.

**Claims**

1. Method for the treatment of effluents in which a flow of the said effluents is subjected to a pulsed electric field that has the effect of modifying physicochemical and biological characteristics, this modification being used during a solid/liquid separation operation, the solid/liquid separation and the application of a pulsed electric field being operations carried out at different locations in the effluent flow, **characterized in that** the pulsed electric field is used according to a discharge mode, in other words a single acting mode, the discharge mode being obtained by the pulsed discharge of a capacitor supplied by a d.c. supply and has voltage value, current value, pulse repetition frequency and voltage front shape regulatable characteristics.

2. Method according to claim 1, **characterized in that** the pulsed electric field is used in accordance with a charge and discharge mode, i.e. a double acting mode, the charge mode being obtained by a pulsed charging of a capacitor supplied by a d.c. supply.

3. Method according to claim 1, **characterized in that** the solid/liquid separation operation is a membrane filtration operation.

4. Method according to claim 3, **characterized in that** the filtration method is chosen among tangential filtration, frontal filtration and semi-frontal type filtration.

5. Method according to claim 1, **characterized in that** the solid/liquid separation operation is a settlement operation.

6. Method according to claim 1, **characterized in that** the said modification of physicochemical and biological characteristics enables hydrolysis of dissolved substances, aggregation of colloids, complete or partial destruction of microorganisms and simultaneous activation of remaining microorganisms.

7. Application of the method according to claim 1 to the treatment of treatment plant effluents and sludge, either in an activated sludge reactor, or in a rotofermenter.

8. Installation for the treatment of effluents, comprising means for a flow of the said effluents to be subjected to a solid/liquid separation operation, and means for a flow of the said effluents to be subjected to a pulsed electric field that has the effect of modifying physicochemical and biological characteristics, this modification being used during a solid/liquid separation, the solid/liquid separation means (13, 14, 15, 23, 33) and means for applying a pulsed electric field (12, 24, 25, 34) being located at different locations along the effluent flow, **characterized in that** means for applying a pulsed electric field are means operating according to a discharge mode, in other words a single acting mode, the discharge mode being obtained by the pulsed discharge of a capacitor supplied by a d.c. supply and having voltage value, current value, pulse repetition frequency and voltage front shape regulatable characteristics.

9. Installation according to claim 8, **characterized in that** the means for applying a pulsed electric field (12, 24, 25, 34) are means operating according to a charge and discharge mode, i.e. a double acting mode, the charge mode being obtained by the pulsed charging of a capacitor supplied by a d.c. supply.

10. Installation according to claim 8, **characterized in that** means for subjecting the said effluent flow to a solid/liquid separation operation are membrane filtration means.

11. Installation according to claim 10, **characterized in that** the filtration means (13, 14, 15, 23, 33) are chosen from among tangential filtration, frontal or semi-frontal type filtration means.

12. Installation according to claim 8, **characterized in that** means to apply the solid/liquid separation operation to the said effluent flow are settlement means.

13. Installation according to claim 8, **characterized in that** the pulsed electric field have regulated characteristics so that said modification of the physicochemical and biological characteristics permits the hydrolysis of dissolved substances, the aggregation of colloids, the complete or partial destruction of microorganisms and the simultaneous activation of the remaining microorganisms.

**Patentansprüche**

1. Verfahren zur Behandlung von Abwässern, bei dem auf einen Abwässerfluss ein elektrisches Pulsfeld angewendet wird, dessen Effekt die Modifikation der bei einer Feststoff/Flüssigkeits-Trennoperation genutzten physikalisch-chemischen und biologischen Eigenschaften ist, wobei die Feststoff/Flüssigkeits-Trennung und die Pulsfeldanwendung an unterschiedlichen Stellen des Abwässerflusses stattfinden, **dadurch gekennzeichnet, dass** das elektrische Pulsfeld gemäß einem Entladungsbetriebs benutzt wird, das heißt einfachwirkend, wobei der Entladungsbetrieb durch impulsartiges Entladen eines durch eine Gleichstromversorgung gespeisten Kondensators realisiert wird und regel- bzw. einstellbare Kenngrößen des Spannungswerts, des Stromwerts, der Impulsrepetitionsfrequenz und der Form der Spannungsfront aufweist.

2. Verfahren nach Anspruch 1, **dadurch gekennzeichnet, dass** das elektrische Pulsfeld gemäß einem Ladungs- und Entladungsbetrieb benutzt wird, das heißt doppeltwirkend, wobei der Ladungsbetrieb durch impulsartiges Laden eines durch eine Gleichstromversorgung gespeisten Kondensators realisiert wird.

3. Verfahren nach Anspruch 1, **dadurch gekennzeichnet, dass** die Feststoff/Flüssigkeits-Trennoperation eine Membranfiltrationsoperation ist.

4. Verfahren nach Anspruch 3, **dadurch gekennzeichnet, dass** die Art der Filtration ausgewählt wird unter Tangentialfiltration, Frontalfiltration und Semifrontalfiltration.

5. Verfahren nach Anspruch 1, **dadurch gekennzeichnet, dass** die Feststoff/Flüssigkeits-Trennoperation eine Dekantieroperation ist.

6. Verfahren nach Anspruch 1, **dadurch gekennzeichnet, dass** das elektrische Pulsfeld so geregelte bzw. eingestellte Kenngrößen aufweist, dass die genannte Modifikation der physikalisch-chemischen und biologischen Eigenschaften die Hydrolyse gelöster Substanzen, die Aggregation von Kolloiden, die vollständige oder partielle Zerstörung von Mikroorganismen und die simultane Aktivierung der restlichen Mikroorganismen ermöglicht.

7. Anwendung des Verfahrens nach Anspruch 1 zur Behandlung der Abwässer und Schlamme einer Kläranlage entweder in einem Belebtschlammreaktor oder in einem Membranen-Bioreaktor.

8. Anlage zur Behandlung von Abwässern mit Einrichtungen, um einen Abwässerfluss einer Feststoff/Flüssigkeits-Trennung zu unterziehen, und Einrichtungen, um auf den genannten Abwässerfluss ein elektrisches Pulsfeld anzuwenden, dessen Effekt die Modifikation der bei der Feststoff/Flüssigkeits-Trennoperation genutzten physikalisch-chemischen und biologischen Eigenschaften ist, wobei die Feststoff/Flüssigkeits-Trenneinrichtungen (13, 14, 15; 23; 33) und die Impulsfeldanwendungseinrichtungen (12; 24, 25; 34) an unterschiedlichen Stellen des Abwässerflusses angeordnet sind, **dadurch gekennzeichnet, dass** die Impulsfeldanwendungseinrichtungen Einrichtungen sind, die im Entladungsbetrieb arbeiten, das heißt einfachwirkend, wobei der Entladungsbetrieb durch impulsartiges Entladen eines durch eine Gleichstromversorgung gespeisten Kondensators realisiert wird und regel- bzw. einstellbare Kenngrößen des Spannungswerts, des Stromwerts, der Impulsrepetitionsfrequenz und der Form der Spannungsfront aufweist.

9. Anlage nach Anspruch 8, **dadurch gekennzeichnet, dass** die Impulsfeldanwendungseinrichtungen (12; 24, 25; 34) Einrichtungen sind, die im Ladungs- und Entladungsbetrieb arbeiten, das heißt doppeltwirkend, wobei der Ladungsbetrieb durch impulsartiges Laden eines durch eine Gleichstromversorgung gespeisten Kondensators realisiert wird.

10. Anlage nach Anspruch 8, **dadurch gekennzeichnet, dass**
die Einrichtungen zur Realisierung der Feststoff/Flüssigkeits-Trennung der Abwässer Membranfiltrationseinrichtungen sind.

11. Anlage nach Anspruch 10, **dadurch gekennzeichnet, dass** der Typ der Filtrationseinrichtungen (13, 14, 15; 23; 33) ausgewählt wird unter Tangential-, Frontal- und Semifrontal-Filtrationseinrichtungen.

12. Anlage nach Anspruch 8, **dadurch gekennzeichnet, dass** die Einrichtungen zur Realisierung der Feststoff/Flüssigkeits-Trennung der Abwässer Dekantiereinrichtungen sind.

13. Anlage nach Anspruch 8, **dadurch gekennzeichnet, dass** das elektrische Pulsfeld so geregelte bzw. eingestellte Kenngrößen aufweist, dass die genannte Modifikation der physikalisch-chemischen und biologischen Eigenschaften die Hydrolyse gelöster Substanzen, die Aggregation von Kolloiden, die vollständige oder partielle Zerstörung von Mikroorganismen und die simultane Aktivierung der restlichen Mikroorganismen ermöglicht.

FIG. 1

FIG. 2

$C_1$ ← 15 → $P_3$

14

$R_2$ 13 → $P_2$

$R_1$ → $P_1$

12

10

11

# FIG. 3

$C_2$

25

23

24

→ $P_4$

20

21 22

# FIG. 4

FIG. 5

FIG. 6